**Europäisches Patentamt**

**European Patent Office**

**Office européen des brevets**

(19)

(11) Veröffentlichungsnummer : **0 173 218 B1**

(12) # EUROPÄISCHE PATENTSCHRIFT

(45) Veröffentlichungstag der Patentschrift :
19.10.88

(51) Int. Cl.⁴ : **B 21 J 1/06**

(21) Anmeldenummer : 85110412.5

(22) Anmeldetag : 20.08.85

(54) **Entnahmerollgang einer Schmiedeblockerwärmungsanlage.**

(30) Priorität : 30.08.84 DE 3431819

(43) Veröffentlichungstag der Anmeldung :
05.03.86 Patentblatt 86/10

(45) Bekanntmachung des Hinweises auf die Patenterteilung : 19.10.88 Patentblatt 88/42

(84) Benannte Vertragsstaaten :
AT BE CH DE FR GB IT LI

(56) Entgegenhaltungen :
AT-B-   361 759
DD-A-   122 038

(73) Patentinhaber : **BBC Brown Boveri Aktiengesellschaft
Kallstadter Strasse 1
D-6800 Mannheim 31 (DE)**

(72) Erfinder : **Jürgens, Heinz, Dipl.-Ing.
Peukinger Weg 8a
D-4750 Unna (DE)**

(74) Vertreter : **Kempe, Wolfgang, Dr. et al
c/o BROWN, BOVERI & CIE AG ZPT Postfach 351
D-6800 Mannheim 31 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 173 218 B1

## Beschreibung

Die Erfindung betrifft einen Entnahmerollgang für eine Schmiedeblockerwärmungsanlage, deren wenigstens erste Rolle ein Nockenprofil aufweist.

Zwei aufeinanderfolgende Blöcke, die eine Erwärmungsanlage verlassen und über einen Entnahmerollgang der Weiterverarbeitung (z. B. in einer Schmiedeeinrichtung oder -Presse) zugeführt werden, neigen infolge Diffusion zwischen den Blöcken (Adhäsion) zum Kleben oder Verschweißen miteinander. Ein derartiges Verschweißen beginnt etwa bei Temperaturen um 900 °C.

Um miteinander verklebte bzw. verschweißte Blöcke wieder voneinander zu trennen, ist es bekannt, den zweiten Block nach dessen Austritt aus der Erwärmungsanlage festzuklemmen und den ersten Block durch einen Blockbrecher vom zweiten Block abzubrechen. Zum Abbrechen des ersten Blockes kann auch die erste Rolle des Entnahmerollganges, die gemeinsam mit den übrigen Rollen des Entnahmerollganges angetrieben wird, ein Nockenprofil aufweisen. Dadurch werden auf den aus der Erwärmungsanlage austretenden Block Kraftstöße übertragen, die ein Trennen zweier verklebter Blöcke bewirken sollen.

Insbesondere bei gesägten Blöcken sind jedoch die Kraftstöße zu schwach, um zwei aufeinanderfolgende Blöcke zu trennen, so daß zusätzlich die aufeinanderfolgenden Blöcke durch einen Blockbrecher abgebrochen werden müssen. Die Trennung zweier aufeinanderfolgender Blöcke erfordert, daß zwischen die einander zugewandten Stirnflächen der Blöcke Sauerstoff eintritt und sich auf den Stirnflächen eine Oxidschicht bildet.

Aufgabe der Erfindung ist es, eine Einrichtung anzugeben, durch die miteinander verklebte Blöcke, die die Erwärmungsanlage verlassen, bei geringer Fehlerquote voneinander getrennt werden, ohne daß eine Unterbrechung bzw. Störung des Arbeitsrhythmusses durch den gesonderten Arbeitsgang des Blockbrechens erfolgt.

Diese Aufgabe wird bei einem Entnahmerollgang mit den Merkmalen des Oberbegriffes des Patentanspruches 1 dadurch gelöst, daß die Rollen mit Nockenprofil mit einer gegenüber den übrigen, nachgeschalteten Rollen erhöhten Drehzahl angetrieben werden. Diese Lösung ist besonders wirkungsvoll, da die von den Nocken auf die Blöcke übertragene Kraft zur Trennung der Verklebung mit der Drehzahl steigt.

Für den Entnahmerollgang werden zweckmäßigerweise zwei getrennte Antriebe vorgesehen, und zwar einer für die ersten Rollen (z. B. für drei erste Rollen), von denen wenigstens eine das Nockenprofil aufweisen soll, und ein zweiter Antrieb für die übrigen Rollen des Entnahmerollganges. Es könnte jedoch auch ein gemeinsamer Antrieb alle Rollen antreiben, wobei zwischen den ersten und den übrigen Rollen ein Übersetzungsgetriebe vorzusehen wäre. Getrennte Antriebe haben jedoch den Vorteil, daß die Drehzahl der ersten Rollen unabhängig von der Vorschubgeschwindigkeit des Rollganges einstellbar und steuerbar ist. So kann durch eine entsprechende Steuerung die Drehzahl der ersten Rollen abhängig von den Blockabmessungen und den Klebekräften optimiert werden, so daß die durch die Kraftstöße belasteten Lager der Rollen weitgehend geschont werden.

In vorteilhafter Weise entspricht die Drehzahl der ersten Rollen etwa der zwei- bis dreifachen Drehzahl der übrigen Rollen. Durch die Erhöhung der Drehzahl der ersten Rollen werden die Kraftstöße, die die Nocken auf die Blöcke übertragen, wesentlich vergrößert, ohne daß gleichzeitig die Transportgeschwindigkeit der Blöcke am Ende des Rollganges vergrößert wird. Zwei miteinander verklebte Blöcke werden daher wesentlich zuverlässiger getrennt. Ein gesonderter Arbeitsgang für das Blockbrechen ist in der Regel nicht erforderlich. Die Blöcke können ohne Unterbrechung durch die Anlage laufen. Die vorgeschlagene Lösung ist technisch problemlos und kostengünstig realisierbar. Auch ein Nachrüsten bereits errichteter Anlagen ist möglich.

Wegen des wesentlich stärkeren Impulses, den die erfindungsgemäße Rolle mit Nockenprofil auf den in ihrem Bereich befindlichen Block überträgt, besteht die Gefahr, daß der Block zu weit hochspringt und die Austrittsöffnung der Induktionsspule beschädigt. Daher ist es zweckmäßig, oberhalb der Rolle mit Nockenprofil einen Niederhalter anzuordnen, der das Hochspringen der Blöcke vertikal begrenzt.

Durch entsprechende Gestaltung des Rollenquerschnittes können weitere Vorteile erzielt werden. Es ist vorteilhaft die wenigstens erste Rolle als zylindrische Walze, oder Walze mit von der Kreisform abweichendem Profil auszubilden, auf die wenigstens ein in Walzenachsrichtung verlaufender Rundstab aufgeschweißt ist. Hierdurch erfolgt ein kräftiger Stoß pro Umdrehung der Rolle auf den auf ihr liegenden Block.

Ferner kann das Rollenprofil spiralförmig ausgebildet sein. Der Übergang von dem äußeren auf den inneren Spiraldurchmesser ist dabei relativ steil. Dadurch wird der Knüppel schlagartig angehoben, fällt nach dem Schlag jedoch nicht sehr tief herab, sondern senkt sich entsprechend dem Spiralverlauf langsam ab. Die Folge ist eine Schonung der Rollenlager.

Eine besonders vorteilhafte Weiterbildung der Erfindung sieht vor, daß schon innerhalb der Erwärmungseinrichtung ein Verkleben zweier aufeinanderfolgender Blöcke weitgehend vermieden wird, indem die Gleitschienen im Bereich der Erwärmungseinrichtung, auf denen die Schmiedeblöcke aufliegen, nicht eben sind, sondern eine vertikal gerichtete Zick-Zack-Form aufweisen. Beispielsweise können bei einer Erwärmungseinrichtung, die aus mehreren hintereinander geschalteten Induktionsspulen besteht, die Induktionsspulen etwas aus ihrer horizontalen Lage gekippt werden. Beim Durchlaufen der zick-zackförmigen Gleitschiene wirken auf die Blockenden aufgrund des Eigengewichtes der Blöcke Kräfte, die die Blockstirnflächen durch einen keilförmigen Spalt voneinander trennen und das Eindringen von Sauerstoff in diesen Spalt ermöglichen. Die Anzahl der Zacken richtet sich nach der Blocklänge. Ferner ist darauf zu achten, daß die lichte Höhe der Spule groß genug gehalten wird, um eine Beschädigung der oberen Innenwandung zu vermeiden.

In zweckmäßiger Weise sind auf den Entnahmerollgang zwei Lichtschranken ausgerichtet, durch die registriert werden kann, ob sich in ihrem Bereich ein Block befindet. Die erste der beiden Lichtschranken ist im Bereich der Rollen mit Nockenprofil und die zweite in etwa einer Blocklänge dahinter angeordnet. Durch die beiden Lichtschranken läßt sich automatisch feststellen, ob zwei aufeinanderfolgende Blöcke trotz der Trennversuche immer noch aneinander kleben und zusammen durch den Entnahmerollgang weitertransportiert werden.

Es ist von Vorteil eine weitere, dritte Lichtschranke in etwa einer weiteren Blocklänge hinter der zweiten Lichtschranke auf den Entnahmerollgang auszurichten. Die Anordnung von drei Lichtschranken ermöglicht die Kontrolle, ob zwei oder mehr auf dem Rollgang befindliche Blöcke zusammenkleben (was bei Überhitzung möglich wäre).

Es ist zweckmäßig, am Entnahmerollgang eine Vorrichtung vorzusehen, die ein Aussortieren miteinander verklebter Blöcke erlaubt. Hierfür kommt entweder eine im Bereich des Entnahmerollganges befindliche Kammleiste zum Abkippen der Ausschußblöcke oder eine sich an den Entnahmerollgang anschließende Rutsche mit Ausschußweiche in Frage.

Um bei einem längeren Arbeitsrhythmus der nachfolgenden Weiterverarbeitungseinrichtung (Schmiedeeinrichtung oder -Presse) ein Abkühlen auf dem Entnahmerollgang befindlicher Blöcke zu vermeiden, ist es zweckmäßig eine Rückstoßvorrichtung zum Rückstoßen auf dem Entnahmerollgang befindlicher Blöcke in die Erwärmungsanlage vorzusehen. Lediglich der Block, dessen Weiterverarbeitung unmittelbar bevorsteht, wird weitergeleitet.

Zur Koordination der Bewegungsabläufe der einzelnen Anlagekomponenten ist es vorteilhaft, eine Steuervorrichtung vorzusehen, durch die die Bewegung der Schmiedeblöcke in der Schmiedeblockerwärmungsanlage gesteuert wird. Dabei liefern die Lichtschranken Signale an die Steuervorrichtung, die beinhalten, ob ein einzelner Block die Erwärmungsanlage verläßt, oder ob mehrere Blöcke aneinanderkleben. Handelt es sich um einen einzelnen Block, so gibt die Steuervorrichtung an den Entnahmerollgang einen Steuerbefehl ab, der den Block zur Weiterverarbeitung weiterleitet. Der nachfolgende Block wird durch entsprechende Ansteuerung der Rückstoßvorrichtung in die Erwärmungsanlage zurückgestoßen und verbleibt dort damit er nicht abkühlt solange, bis die nachfolgende Blocksäule den Block weiterschiebt bzw. bis die Weiterverarbeitungsanlage wieder frei ist. Registrieren jedoch die Lichtschranken zwei aneinander klebende Blöcke, die durch die Rollen mit Nockenprofil nicht getrennt werden konnten, so wird ein Steuersignal an eine Kammleiste zum Abkippen der Blöcke bzw. an eine Ausschußweiche abgegeben, so daß die zusammengeklebten Blöcke aus dem Arbeitsprozeß ausgesondert werden können. Sofern jedoch zusätzlich zu den erwähnten Anlagekomponenten auch ein Blockbrecher vorhanden ist, wird dieser durch die Steuereinrichtung betätigt. Sofern drei oder mehr aneinander klebende Blöcke die Rollen mit Nockenprofil passieren, ohne getrennt zu werden, setzt die Steuereinrichtung die gesamte Anlage still, und der Fehler kann durch das Bedienungspersonal behoben werden.

Anhand der Zeichnung, in der ein Ausführungsbeispiel der Erfindung gezeigt ist, sollen die Erfindung sowie weitere vorteilhafte Ausgestaltungen und Weiterbildungen näher erläutert und beschrieben werden.

Es zeigen:
Fig. 1 einen Entnahmerollgang in Seitenansicht,
Fig. 2 einen Entnahmerollgang in Draufsicht,
Fig. 3 zwei in einander verzahnte Rollen,
Fig. 4 eine Ausschußweiche am Ende eines Entnahmerollganges,
Fig. 5 und 6 je eine Nockenrolle im Profil und
Fig. 7 drei gegeneinander verkippte Induktionsspulen.

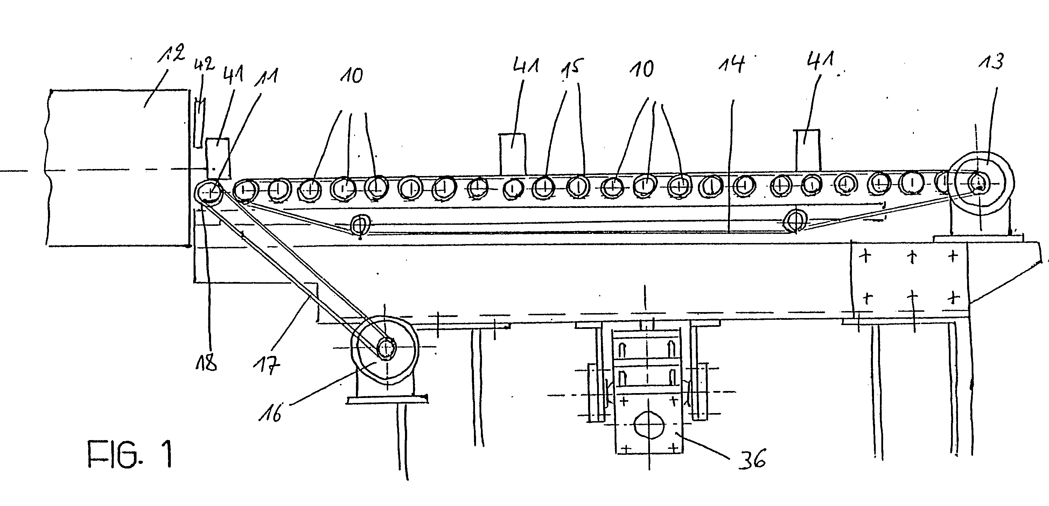

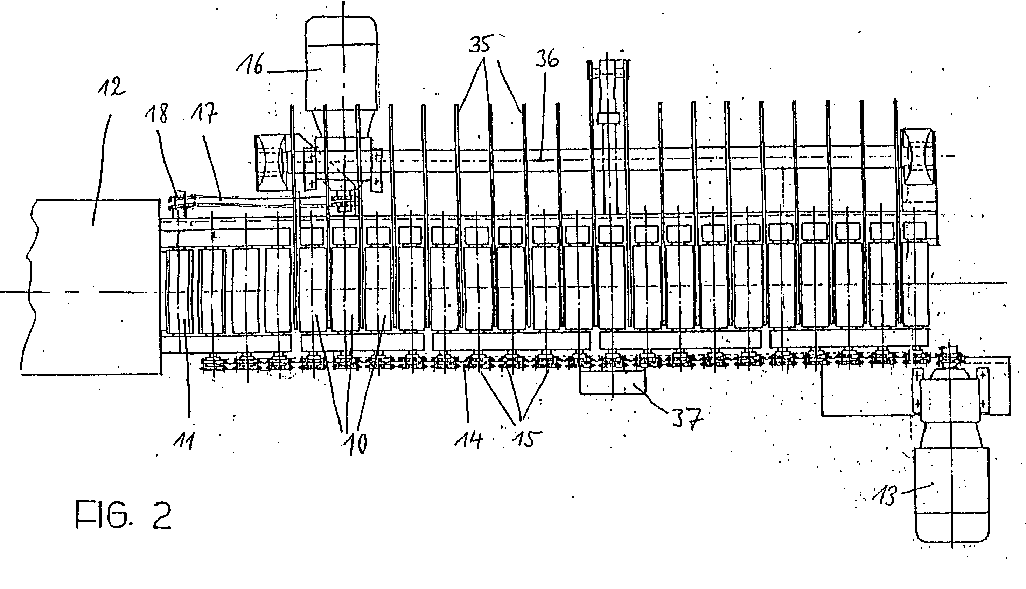

Der Entnahmerollgang gemäß den Figuren 1 und 2 besteht aus einer Vielzahl von in einer Ebene angeordneten Rollen 10, 11. Am Eintritt des Entnahmerollganges (links) ist eine Erwärmungseinrichtung 12 angedeutet, bei der es sich beispielsweise um eine Induktionsspule handeln kann. Am Auslauf des Entnahmerollganges (rechts) läßt sich eine Weiterverarbeitungsanlage (z. B. eine Schmiedeeinrichtung oder -Presse) installieren, die in den Figuren 1 und 2 jedoch nicht dargestellt wurde.

Die Rollen 10 des Entnahmerollganges werden über einen Antrieb 13, eine Kette 14 und an jeder Rolle 10 befindliche Kettenräder 15 angetrieben. Lediglich die erste Rolle 11 ist von diesem Antrieb 13 unabhängig. Sie wird durch einen gesonderten Antrieb 16 über eine Kette 17 und ihr Kettenrad 18 angetrieben. Die Drehzahl der ersten Rolle 11 beträgt dabei in etwa das dreifache der Drehzahl der übrigen Rollen 10.

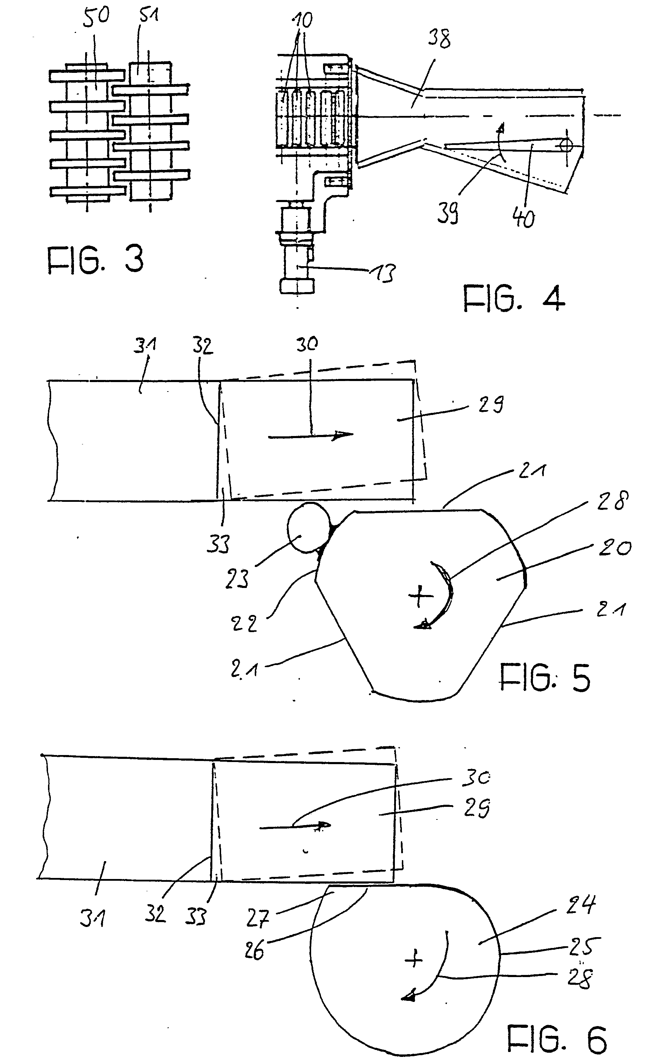

Während die übrigen Rollen 10 zylinderförmig ausgebildet sind, weist die erste Rolle 11 ein Nockenprofil auf. Derartige Nockenprofile sind den Figuren 5 und 8 entnehmbar. Bei der Rolle 20 gemäß Figur 5 handelt es sich um eine solche, die aus einer Zylinderform abgeleitet ist. Sie weist an ihrem Umfang drei um jeweils 120° gegeneinander verdrehte ebene Flächen 21 auf. Zwischen zwei der ebenen Flächen 21 ist auf der zylindrischen Oberfläche 22 ein in Walzenachsrichtung verlaufender Rundstab 23 aufgeschweißt.

Bei der Rolle 24 gemäß Figur 6 handelt es sich um eine solche mit im Querschnitt spiralförmiger

Randlinie 25. Das innere und äußere Ende der spiralförmigen Randlinie 25 werden durch eine ebene Übergangfläche 28 miteinander verbunden. Hierdurch wird eine längs der Rollenachse verlaufende Nocke 27 auf dem Umfang der Rolle 24 gebildet.

Die Drehrichtung der Rollen 20, 24 sind in Figur 5 und 6 durch einen Pfeil 28 dargestellt. Ferner befindet sich in beiden Figuren oberhalb der Rolle 20, 24 ein Block 29, dessen Bewegungsrichtung durch einen Pfeil 30 dargestellt ist. Beim Drehen der Rolle 20, 24 erhält der darüber befindliche Block 29 pro Umdrehung einen kräftigen Schlag durch den Rundstab 23 bzw. die Nocke 27 und wird aus seiner horizontalen Lage angehoben (gestrichelt gezeichnet). Da der nachfolgende Block 31 bestrebt ist, in seiner horizontalen Ruhelage zu verharren, tritt eine Kraft auf die Klebefläche 32 zwischen dem ersten Block 29 und dem nachfolgenden Block 31 auf, durch die, falls die Klebewirkung nicht zu stark ist, ein Spalt 33 zwischen den ersten Block 29 und den nachfolgenden Block 31 gerissen wird. In den Spalt 33 dringt Sauerstoff ein, und es bildet sich auf den Stirnflächen der Blöcke 29, 31 eine Oxidschicht, die ein nochmaliges Verkleben bzw. Verschweißen der Blöcke verhindert.

Zum Aussondern (Abkippen) Von Ausschußblöcken enthält der Entnahmerollgang gemäß den Figuren 1 und 2 eine Kammleiste 35. Die Kammleiste 35 ist um die Welle 36 drehbar gelagert. Die Welle 36 ist durch einen Antrieb 37 verdrehbar. Beim Verdrehen der Welle 36 werden die zwischen den Rollen 10 befindlichen Enden der Kammleiste 35 angehoben. Sie heben ebenfalls die darüber befindlichen Blöcke an, welche über die auf diese Weise schräg gestellte Kammleiste 35 seitlich abrutschen.

Die Aussonderung von Ausschußblöcken kann auch über eine Ausschußweiche erfolgen, wie sie in Figur 4 dargestellt ist. Die Ausschußweiche ist am Ende des Entnahmerollganges angeordnet. Sie besteht aus einer Rutsche 38 und einem in Pfeilrichtung 39 schwenkbaren Leithebel 40. Je nach Stellung des Leithebels 40 gleiten die Blöcke geradeaus zur Weiterbearbeitung ab, oder sie werden seitlich umgelenkt und dem Ausschußkübel zugeführt.

Aus Figur 1 ist die Lage von drei Lichtschranken 41 entnehmbar deren Abstand voneinander jeweils in etwa einer Blocklänge entspricht. Die Lichtschranken 41 sind Reflektions-Lichtaster und vereinen in einer Baueinheit sowohl den Sender als auch den Empfänger. Ihr Ausgangssignal beinhaltet die Information, ob sich im Tastbereich der Lichtschranke 41 ein Block befindet oder nicht, bzw. ob im Abtastbereich eine Blocklücke vorliegt.

In Figur 1 ist ferner ein Niederhalter 42 dargestellt, der in etwa oberhalb der ersten Rolle 11 angeordnet ist und das Hochspringen der Blöcke begrenzt.

In Figur 3 sind zwei Rollen 50, 51 dargestellt, in deren Oberflächen sich umlaufende Nuten befinden. Die Stege zwischen zwei Nuten der einen Rolle greifen in die Nuten der anderen Rolle ein. Auf diese Weise lassen sich die Achsen der beiden Rollen 50, 51 trotz relativ großen Außendurchmessers der Rollen relativ nah aneinander führen. Bei diesen Rollen 50, 51 kann es sich um Rollen mit Nockenprofil oder um Rollen mit kreisrundem Profil handeln. Die derart ineinander verzahnten Rollen 50, 51 sind zum Transport von kurzen Blöcken geeignet.

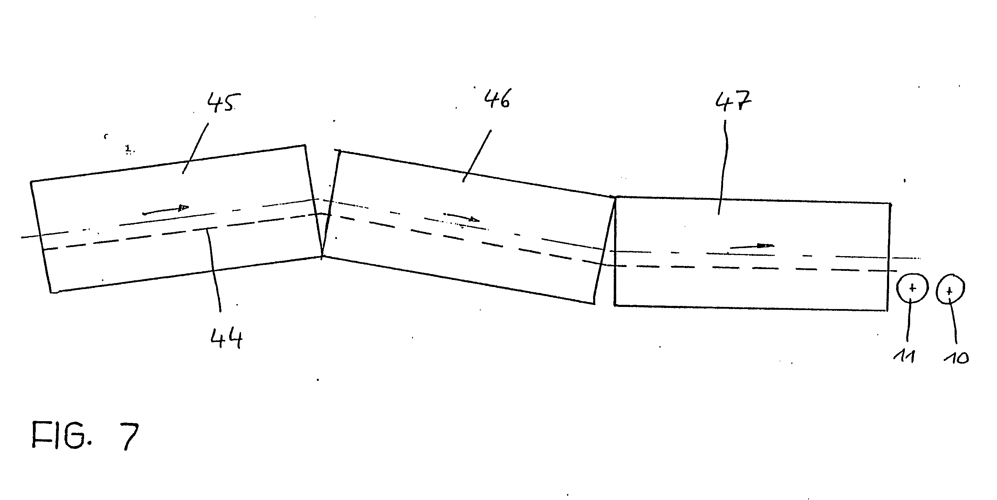

In Figur 7 ist die Anordnung von drei hintereinander geschalteten Induktionsspulen 45, 46, 47 dargestellt. Die Spulenachsen der drei Induktionsspulen 45, 46, 47 sind gegen einander in vertikaler Richtung verkippt. Die Gleitschienen 44, auf denen die Schmiedeblöcke aufliegen und durch die Induktionsspulen 45, 46, 47 geschoben werden, bilden eine Zick-Zack-Form. Blöcke, die durch die Induktionsspulen 45, 46, 47 geschoben werde, kippen aufgrund ihres Eigengewichtes an den Wendepunkten der Zick-Zack-Form ab. Hierdurch wird das Verkleben der Blöcke im Induktionsofen erschwert, da in die Lücken, die sich an den Wendepunkten zwischen zwei aufeinander folgenden Blöcken bilden, Sauerstoff eindringen kann und sich eine Oxidschicht auf den Stirnflächen der Blöcke bilden kann.

**Patentansprüche**

1. Entnahmerollgang einer Schmiedeblockerwärmungsanlage, insbesondere einer induktiven Schmiedeblockerwärmungsanlage, deren wenigstens erste Rolle ein Nockenprofil aufweist, dadurch gekennzeichnet, daß die Rollen (11, 20, 24) mit Nockenprofil mit einer gegenüber den übrigen, nachgeschalteten Rollen (10) erhöhten Drehzahl angetrieben sind.

2. Entnahmerollgang nach Anspruch 1, dadurch gekennzeichnet, daß die Drehzahl der Rollen (11, 20, 24) mit Nockenprofil etwa der zwei- bis dreifachen Drehzahl der übrigen Rollen (10) entspricht.

3. Entnahmerollgang nach Anspruch 1 oder 2, dadurch gekennzeichnet, daß oberhalb der Rollen (11, 20, 24) mit Nockenprofil ein Niederhalter (42) angeordnet ist, der das Hochspringen der Blöcke (29) begrenzt.

4. Entnahmerollgang nach einem der Ansprüche 1 bis 3, dadurch gekennzeichnet, daß die wenigstens erste Rolle (11, 20) als zylindrische Walze oder Walze mit von der Kreisform abweichendem Profil ausgebildet ist, auf die wenigstens ein in Walzenachsrichtung verlaufender Rundstab (23) aufgeschweißt ist.

5. Entnahmerollgang nach einem der Ansprüche 1 bis 3, dadurch gekennzeichnet, daß die wenigstens erste Rolle (11, 24) im Querschnitt eine spiralförmige Randlinie (25) mit im Überlappungsbereich steilem Übergang (26) zwischen den beiden Spiralradien aufweist.

6. Entnahmerollgang mit vorgeschaltetem Induktionsofen nach einem der Ansprüche 1 bis 5, dadurch gekennzeichnet daß die Gleitschienen (44), auf denen die Schmiedeblöcke aufliegen im Bereich des Induktionsofens (45, 46, 47) nicht eben angeordnet sind, sondern eine vertikal gerichtete Zick-Zack-Form aufweisen.

7. Entnahmerollgang nach einem der Ansprüche 1 bis 6, dadurch gekennzeichnet, daß auf den Entnahmerollgang zwei Lichschranken (41) ausgerichtet sind, von denen die erste im Bereich der Rollen (11) mit Nockenprofil und die zweite in etwa einer Blocklänge dahinter angeordnet ist.

8. Entnahmerollgang nach Anspruch 7, dadurch gekennzeichnet, daß eine dritte Lichtschranke (41) in etwa einer weiteren Blocklänge hinter der zweiten Lichtschranke (41) auf den Entnahmerollgang ausgerichtet ist.

9. Entnahmerollgang nach einem der Ansprüche 1 bis 8, dadurch gekennzeichnet, daß sich im Bereich des Entnahmerollganges eine Kammleiste (35) zum Abkippen der Ausschußblöcke befindet.

10. Entnahmerollgang nach einem der Ansprüche 1 bis 8, dadurch gekennzeichnet, daß sich an den Entnahmerollgang eine Rutsche (38) mit Ausschußweiche (40) anschließt.

11. Entnahmerollgang nach einem der Ansprüche 1 bis 10, dadurch gekennzeichnet, daß eine Rückstoßvorrichtung zum Rückstoßen auf dem Entnahmerollgang befindlicher Blöcke in die Erwärmungsanlage vorhanden ist.

12. Entnahmerollgang nach Anspruch 11, dadurch gekennzeichnet, daß eine Steuervorrichtung die Bewegung der Schmiedeblöcke in folgender Weise steuert :

- durch die Lichtschranken (41) wird festgestellt, ob ein einzelner Block die Erwärmungsanlage verläßt, oder ob mehrere Blöcke aneinanderkleben,

- handelt es sich um einen einzelnen Block, so wird dieser zur Weiterverarbeitung weitergeleitet, der nachfolgende Block wird durch die Rückstoßvorrichtung in die Erwärmungsanlage zurückgestoßen,

- handelt es sich um zwei aneinanderklebende Blöcke, die durch die Rollen (11) mit Nockenprofil nicht getrennt werden konnten, so werden diese entweder getrennt, indem der nachfolgende Block durch eine Klemmvorrichtung festgehalten und der vorlaufende Block durch einen Blockbrecher abgebrochen wird, oder sie werden durch Abkippen einer Kammleiste (35) bzw. durch Umschalten einer Ausschußweiche (40) aus dem Arbeitsprozeß ausgesondert.

### Claims

1. Removal roller table of a forging ingot heating unit, in particular of an inductive forging ingot heating unit, at least the first roller of which has a cam profile, characterized in that the rollers (11, 20, 24) with cam profile are driven at an increased speed in comparison with the other, following rollers (10).

2. Removal roller table according to Claim 1, characterized in that the speed of the rollers (11, 20, 24) with cam profile is approximately equivalent to two to three times the speed of the other rollers (10).

3. Removal roller table according to Claim 1 or 2, characterized in that there is arranged above the rollers (11, 20, 24) with cam profile a holddown device (42) which limits the jumping-up of the ingots (29).

4. Removal roller table according to one of Claims 1 to 3, characterized in that at least the first roller (11, 20) is designed as a cylindrical roll, or a roll with a profile other than that of a circle, onto which is welded at least one round bar (23) running in the axial direction of the roll.

5. Removal roller table according to one of Claims 1 to 3, characterized in that at least the first roller (11, 24) has a cross-sectionally spiralled outline (25) with, in the region of overlap, a steep transition (26) between the two spiral radii.

6. Removal roller table with upstream induction furnace according to one of Claims 1 to 5, characterized in that the sliding rails (44) on which the forging ingots rest are not arranged flatly in the region of the induction furnace (45, 46, 47) but have a vertically directed zig-zag shape.

7. Removal roller table according to one of Claims 1 to 6, characterized in that there are aligned with the removal roller table two light barriers (41), of which the first is arranged in the region of the rollers (11) with cam profile and the second is arranged approximately one ingot length behind it.

8. Removal roller table according to Claim 7, characterized in that a third light barrier (41) is aligned with the removal roller table approximately another ingot length behind the second light barrier (41).

9. Removal roller table according to one of Claims 1 to 8, characterized in that there is in the region of the removal roller table a rack (35) for tipping off the reject ingots.

10. Removal roller table according to one of Claims 1 to 8, characterized in that a chute (38) with reject switch (40) adjoins the removal roller table.

11. Removal roller table according to one of Claims 1 to 10, characterized in that there is a return device for pushing ingots on the removal roller table back into the heating unit.

12. Removal roller table according to Claim 11, characterized in that a control device controls the movement of the forging ingots in the following way :

- it is determined by the light barriers (41) whether a single ingot is leaving the heating unit or whether several ingots are stuck together,

- if it is a single ingot, it is moved on for further processing, the following ingot is pushed back into the heating unit by the return device,

- if it is two ingots which are stuck together which could not be separated by the rollers (11) with cam profile, they are either separated by the following ingots being held by a clamping device and the leading ingot being broken off by an ingot breaker, or they are segregated from the operating process by tipping-up of a rack (35) or by switching-over of a reject switch (40).

**Revendications**

1. Chemin de rouleaux de reprise d'une installation de chauffage de lingots de forge, notamment d'une installation de chauffage par induction de lingots de forge, dont au moins le premier rouleau possède un profil de came, caractérisé en ce que les rouleaux (11, 20, 24) à profil de came sont entraînés à une vitesse de rotation supérieure à celle des autres rouleaux (10) montés en aval.

2. Chemin de rouleaux de reprise selon la revendication 1, caractérisé en ce que la vitesse de rotation des rouleaux (11, 20, 24) à profil de came est comprise entre environ deux et trois fois la vitesse de rotation des autres rouleaux (10).

3. Chemin de rouleaux de reprise selon revendication 1 ou 2, caractérisé en ce qu'au-dessus des rouleaux (11, 20, 24) à profil de came est disposé un dispositif (42) de butée limitant la hauteur de rebondissement des lingots (29).

4. Chemin de rouleaux de reprise selon l'une quelconque des revendications 1 à 3, caractérisé en ce qu'au moins le premier rouleau (11, 20) est réalisé comme rouleau cylindrique ou comme rouleau à profil s'écartant de la forme circulaire, sur lequel est soudée au moins une barre ronde (23) s'étendant dans le sens axial du rouleau.

5. Chemin de rouleaux de reprise selon l'une quelconque des revendications 1 à 3, caractérisé en ce qu'au moins le premier rouleau (11, 24) présente en section un contour (25) en forme de spirale avec une transition (26) raide dans la zone de raccordement entre les deux rayons de spirale.

6. Chemin de rouleaux de reprise avec four à induction monté en amont selon l'une quelconque des revendications 1 à 5, caractérisé en ce que dans la zone du four à induction (45, 46, 47) les rails de glissement (44), sur lesquels reposent les lingots de forge, ne sont pas disposés de façon plane, mais présentent une forme en zigzag verticalement.

7. Chemin de rouleaux de reprise selon l'une quelconque des revendications 1 à 6, caractérisé en ce que deux barrières opto-électriques (41) sont orientées sur le chemin de rouleaux de reprise, dont la première est disposée dans la zone des rouleaux (11) à profil de came et la deuxième est disposée en aval de la première, à une distance correspondant approximativement à une longueur de lingot.

8. Chemin de rouleaux de reprise selon la revendication 7, caractérisé en ce qu'une troisième barrière opto-électrique (41) orientée sur le chemin de rouleaux de reprise est disposée à peu près à une longueur de lingot en aval de la deuxième barrière opto-électrique (41).

9. Chemin de rouleaux de reprise selon l'une quelconque des revendications 1 à 8, caractérisé en ce que dans la zone du chemin de rouleaux de reprise se trouve un peigne (35) pour basculer les lingots de rebut.

10. Chemin de rouleaux de reprise selon l'une quelconque des revendications 1 à 8, caractérisé en ce qu'à la suite du chemin de rouleaux de reprise se trouve un couloir (38) avec un aiguillage de rebut (40).

11. Chemin de rouleaux de reprise selon l'une quelconque des revendications 1 à 10, caractérisé en ce qu'il comprend un dispositif de retour pour repousser des lingots, se trouvant sur le chemin de rouleaux de reprise, dans l'installation de chauffage.

12. Chemin de rouleaux de reprise selon la revendication 11, caractérisé en ce qu'un dispositif de commande commande le déplacement des lingots de forge de la manière suivante :

- les barrières opto-électriques (41) déterminent si un lingot individuel quitte l'installation de chauffage ou bien si plusieurs lingots collent les uns aux autres,

- lorsqu'il s'agit d'un lingot individuel, celui-ci est transféré en vue du traitement ultérieur et le lingot suivant est repoussé dans l'installation de chauffage par le dispositif de retour,

- lorsqu'il s'agit de deux lingots collant l'un à l'autre et n'ayant pas pu être séparés par les rouleaux (11) à profil de came, ou bien les deux lingots sont séparés par le fait que le deuxième lingot est maintenu par un dispositif de blocage et le premier lingot est séparé de force par un casse-lingots, ou bien ils sont éliminés du processus de travail par le basculement d'un peigne (35) ou par la commande d'un aiguillage de rebut (40).

FIG. 1

0 173 218

FIG. 2

0 173 218

FIG. 3

FIG. 4

FIG. 5

FIG. 6

FIG. 7

0 173 218